# EUROPEAN PATENT APPLICATION

(11) **EP 4 626 052 A1**
(43) Date of publication of application: **01.10.2025**
(21) Application number: 24305450.9
(22) Date of filing: 26.03.2024
(51) Int. Cl.: H04W 12/06, H04W 12/08, H04L 9/40

(54) **A METHOD FOR NETWORK SLICE-SPECIFIC AUTHENTICATION AND AUTHORIZATION CORRESPONDING USER EQUIPMENT AND AAA-S**

(71) Applicant: THALES DIS FRANCE SAS, 92190 Meudon (FR)
(72) Inventor: PAULIAC, Mireille, 13470 CARNOUX EN PROVENCE (FR); DANY, Vincent, 13400 AUBAGNE (FR)
(74) Representative: Scheer, Luc

(57) **Abstract**

The invention concerns a method for network slice-specific authentication and authorization in a telecommunication network, the method comprising:
- sending from a AAA-S 24 to a UE 20 in the AT_KDF_INPUT attribute of an EAP message at least one criterion instead of Network Name that the UE 20 has to verify;
- verifying at the UE that the criterion matches with a corresponding criterion stored at the UE 20, and
- if the criterion matches, authorizing the UE 20 to proceed to an authentication per EAP-AKA' with the AAA-S 24 and, if the criterion does not match, abort the authentication.

## Description

The present invention concerns telecommunications and in particular 5G network slicing. 5G network slicing is a network architecture that provides a way to divide a network to provide independent logical networks over physical network resources and functionality. This can help operators (MNOs) to provide differentiated services and more quickly deploy new cases.

An operator can use network slicing to logically allocate physical resources across one or more slices, where each slice may have a different Quality of Service (QoS) and other performance characteristics, as well as configurations and policies, to meet a variety of use cases and possible Service Level Agreements (SLAs).

For example, a slice supporting mobile broadband users requires high data rates and traffic volumes, a slice supporting Internet of Things devices may optimize high-density devices and power consumption, and a slice supporting autonomous driving may provide high-reliability and low-latency communications.

Today, 3GPP defined slice authentication (see for example 5G; 5G System; Network Slice-Specific Authentication and Authorization (NSSAA) services; Stage 3 (3GPP TS 29.526 version 16.2.0 Release 16).

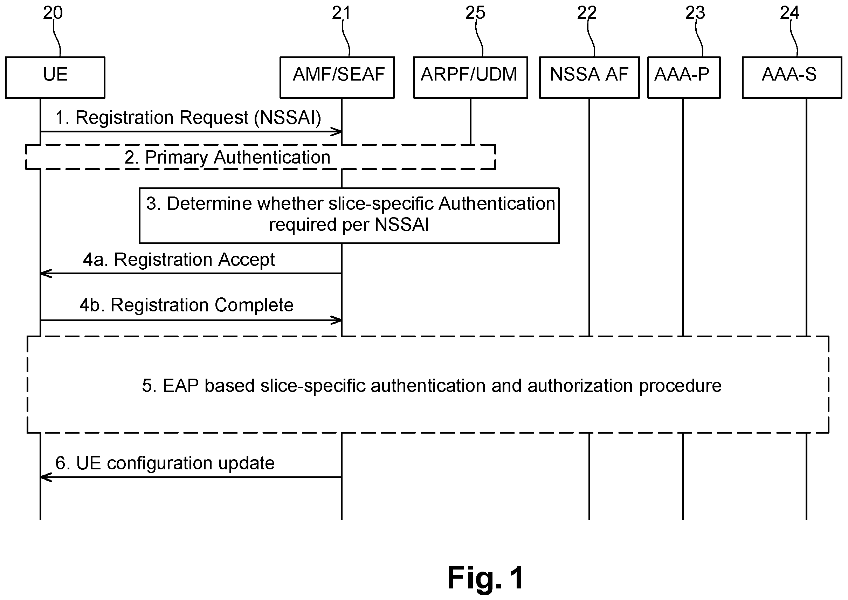

Figure 1 represents the relationship between primary authentication and slice-specific authentication and authorization, as described in ETSI TS 133.501 version 16.3.0, figure 16.2-1. In this figure 1, six entities are represented: A UE (user equipment) 20, an AMF/SEAF Access and Mobility Management Function) 21, a NSSAAF (Network Slice Specific Authentication and Authorization Function) 22, a AAA-P (Authentication, Authorization and Accounting Proxy) 23, a AAA-S (Authentication, Authorization and Accounting Server) 24 and an ARPF/UDM (Authentication Credential Repository and Processing Function / Unified Data Management) 25. The procedure is the following:
At step 1, the UE 20 sends a Registration Request with a list of S-NSSAIs to the AMF/SEAF 21. The UE 20 shall not include those S-NSSAIs for which NSSAA procedures are ongoing, regardless of access types.

At step 2, for an initial Registration Request, the AMF/SEAF 21 shall invoke Primary authentication. For a subsequent Registration Request, the Primary authentication may be skipped if the UE 20 has already been authenticated and the AMF/SEAF 21 has valid security context.

At step 3, the AMF 21 determines whether NSSAA is required for each of S-NSSAls, based on information stored locally or from the UDM 25. This corresponds to the selection of a slice.

At step 4a, the AMF 21 sends the Registration Accept message to the UE 20. Optionally the UE 20 sends a Registration Complete (step 4b).

Step 5 is the EAP based NSSAA procedure for each S-NSSAI if required, as determined in step 3. This is the purpose of the invention as it will be seen later. Step 5 is optional according to the above-mentioned TS and permits to establish a mutual authentication between the UE 20 and the AAA-S 24. EAP is the used protocol and the algorithm used for the exchanges is not specified (TLS/EAP or others).

Finally, at step 6, based on the results of step 5, the AMF 21 sends UE Configuration Update to update the requested S-NSSAI status based on the NSSAA results.

The AAA-S 24 can be outside the core network of the MNO (Mobile Network Operator) according to this TS 33.501: It can be in a private network for example (the MNO rents a slice to a Service Provider owning the AAA-S 24). The Service Provider is confident in the MNO but wishes however having his own authentication with the UE 20. It is then necessary to establish a slice authentication mechanism (step 5 of figure 1).

Moreover, if the UE 20 is in roaming (for example abroad), the slice supporting a communication is not necessarily the one that has been rented by the Service Provider (SP): A VPLMN (Visited PLMN) can attribute an equivalent slice as described in ETSI TS 123 501 V17.11.0 (2024 01) instead of the rented slice. The AAA-S 24 has no precise information of the allocated slice when the AAA-S 24 is not in the core network of the MNO (HPLMN).

For example, if a company has rented a slice for conveying confidential information (for example for EDF and the information is relative to a nuclear plant), EDF gets an information that he is on an EDF slice, but this is not true: The MNO can, for infrastructure reasons, coverage, etc share a slide between EDF and another company (McDonald). There is here a confidentiality problem because there is no strong isolation of the communications.

Moreover, the AAA-S 24 cannot know if the UE 10 is in roaming and the communication can then be intercepted by the authorities of the VPLMN.

The purpose of the invention is, among others, to indicate to the UE 10 that he is not allowed to use a given slice or that he is not allowed to validate the slice authentication when the UE 10 is in a given country.

This purpose is reached thanks to a method according to the attached claims and to corresponding UE and AAA-S.

The invention will be better understood by reading the description below of a preferred embodiment of the invention, given as a non-exhaustive example, in view of the figures that represent:
- Figure 1, an extract of the ETSI standard TS 133 501 V16.3.0 (2020-08) entitled "5G; Security architecture and procedures for 5G System (3GPP TS 33.501 version 16.3.0 Release 16)" represents in figure 16.2-1 the "Authorization for network slice access";
- Figure 2, the EAP based NSSAA procedure, also called "network slice-specific authentication and authorization, according to the present invention and based on ETSI TS 133 501 V17 from January 2024.

Figure 1 has been described in regard of the state of the art.

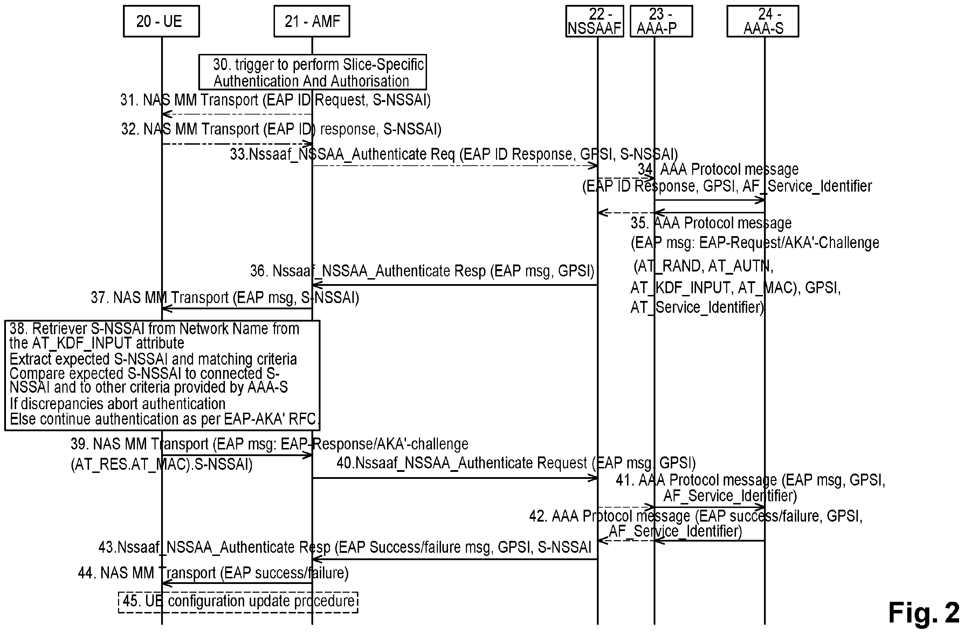

Figure 2 represents the EAP based NSSAA procedure, also called "network slice-specific authentication and authorization, according to the present invention and based on ETSI TS 133 501 V17 from January 2024.

In this procedure, at step 30, for S-NSSAIs that are requiring NSSAA, based on change of subscription information, or triggered by the AAA-S 24, the AMF 21 triggers the start of the NSSAA procedure.

If NSSAA is triggered as a result of Registration procedure, the AMF 21 determines, based on UE 20 Context in the AMF 21, that for some or all S-NSSAI(s) subject to NSSAA, the UE 20 has already been authenticated following a registration procedure on a first access. Depending on NSSAA result (e.g. success/failure) from the previous Registration, the AMF 21 decides, based on Network policies, to skip NSSAA for these S-NSSAIs during the Registration on a second access.

If the NSSAA procedure corresponds to a re-authentication and re-authorization procedure triggered as a result of AAA Server-triggered UE 20 re-authentication and re-authorization for one or more S-NSSAls, or triggered by the AMF 21 based on operator policy or a subscription change and if S-NSSAIs that are requiring Network Slice-Specific Authentication and Authorization are included in the Allowed NSSAI for each Access Type, the AMF 21 selects an Access Type to be used to perform the NSSAA procedure based on network policies.

At step 31, the AMF 21 requests the UE 20 User ID for EAP authentication (EAP ID) for the S-NSSAI in a NAS MM Transport message including the S-NSSAI.

At step 32, the UE 20 provides the EAP ID for the S-NSSAI alongside the S-NSSAI in an NAS MM Transport message towards the AMF 21.

At step 33, the AMF 21 sends the EAP ID to the NSSAAF 22 which provides interface with the AAA, in a NNSSAAF 22_NSSAA_Authenticate Request (EAP ID Response, GPSI, S-NSSAI) message.

At step 34, if the AAA-P 23 is present (e.g. because the AAA-S 24 belongs to a third party and the operator deploys a proxy towards third parties), the NSSAAF 22 forwards the EAP ID Response message to the AAA-P 23, otherwise the NSSAAF 22 forwards the message directly to the AAA-S 24. NSSAAF 22 routes to the AAA-S 24 based on the S-NSSAI. The NSSAAF 22/AAA-P 23 forwards the EAP Identity message to the AAA-S 24 together with S-NSSAI and GPSI. The AAA-S 24 stores the GPSI to create an association with the EAP ID in the EAP ID response message so the AAA-S 24 can later use it to revoke authorization or to trigger reauthentication. The AAA-S 24 uses the EAP-ID and S-NSSAI to identify for which UE 20 and slice authorization is requested.

If the AAA-S 24 belongs to the 3rd party, the NSSAAF 22 optionally maps the S-NSSAI to Extemal Network Slice Information (ENSI) and forwards the EAP Identity message to the AAA-S 24 together with ENSI and GPSI. In this case, the AAA-S 24 uses the EAP-ID and ENSI to identify the UE 20 for which slice authorization is requested.

During steps 35 to 41, EAP-messages are exchanged with the UE 20.

In particular, at step 35, when the AAA-S 24 belongs to the 3rd party and EAP method used is EAP-AKA', the following message is sent:
(EAP msg: EAP-Request/AKA'-Challenge (AT_RAND, AT_AUTN, AT_KDF, AT_KDF_INPUT, AT_MAC), GPSI, AF Service_Identifier)

In this EAP message, there are thus EAP-AKA' related information (AT_RAND, AT_AUTN, AT_KDF, AT_KDF_INPUT, AT_MAC) and also the AT_KDF_INPUT attribute.

The RFC defining the EAP-AKA' in general and the AT_KDF_INPUT in particular can be found here: https://datatracker.ietf.orq/doc/html/rfc9048#name-at kdf input

In this attribute, the invention proposes, instead of the network name as defined in ETSI TS 124 302, to send at least one criterion. This criterion is for example at least one of:
- an exact S-NSSAI value
- a matching Slice Service Type (SST) or matching Service Differentiator (SD)
- a roaming not allowed information
- an allowed or not allowed geographical location of the UE
- a list of authorized S-NSSAI (including mapped S-NSSAI) or forbidden S-NSSAI
- a reference to preconfigured rules in the UE.

At steps 36 and 37, this message is forwarded to the UE 20.

The UE 20 then, at step 38:
- Retrieves the criteria from the AT_KDF_INPUT attribute;
- Extracts the matching criterion and related information;
- Compares the expected S-NSSAI to the connected S-NSSAI (and potentially to other criterion provided by AAA-S 24. This corresponds to a verification by the UE 20 that the received criterion(s) match with the corresponding criterion(s) stored at the UE 2. In particular, it checks the real slice on which authentication is ongoing with regard to the expected slice and the matching criterion provided by the AAA-S 24, and
   - if the criterion matches, the UE 20 is authorized to continue the authentication (step39) with EAP-AKA' with the AAA-S 24.
On the contrary, if the criterion does not match, the authentication is aborted (not represented).

The UE 20 is composed of a ME (Mobile Equipment) and a secure element (Sim card, UICC, eUICC or iUICC for example) and the criterion(s) can be stored in the ME or in the secure element. The comparison can be done also in the ME or in the secure element.

The criterion is stored at the UE 20. It can be either pre-loaded therein (e.g. via the profile if it is stored in the secure element or even in the ME if it is very generic criteria). It is also possible to update the criterion (criteria) by OTA (or OTA loading if no pre-loading).

At step 40, the AMF sends a Nssaaf_NSSAA_Authenticate Request (EAP msg, GPSI) message to the NSAAF 22 and at step 41, the NSAAF 22 sends a AAA Protocol message (EAP msg, GPSI, AF Service_Identifier) to the AAA-S 24. At step 42, the AAA-S 24 replies with a AAA Protocol message (EAP success/failure, GPSI, AF Service_Identifier) to the NSSAAF 22. Steps 43 to 45 are identical to steps 13-15 of TS 133.501 mentioned above.

The invention also concerns an AAA-S 24 for network slice-specific authentication and authorization in a telecommunication network, the AAA-S 24 being configured for sending from the AAA-S 24 to a UE 20 in an AT_KDF_INPUT attribute of an EAP message at least one criterion instead of Network Name, that the UE 20 has to verify.

Finally, the invention also concerns a UE 20 for network slice-specific authentication and authorization in a telecommunication network, the UE 20 being configured for:
- receiving from a AAA-S 24 in an AT_KDF_INPUT attribute of an EAP message at least one criterion instead of Network Name, that the UE 20 has to verify;
- verifying that the criterion matches with a corresponding criterion stored at the UE 20, and
- if the criterion matches, authorizing the UE 20 to proceed to an authentication per EAP-AKA' with the AAA-S 24 and, if the criterion does not match, abort the authentication.

The advantages of the invention are that:
- Security is increased by avoiding connection using untrusted and potentially unsafe slice;
- The SP renting a slice keeps control on then real used slice.

## Claims

1. A method for network slice-specific authentication and authorization in a telecommunication network, said method comprising:
- sending from a AAA-S (24) to a UE (20) in the AT_KDF_INPUT attribute of an EAP message at least one criterion instead of Network Name that said UE (20) has to verify;
- verifying at said UE that said criterion matches with a corresponding criterion stored at said UE (20), and
- if said criterion matches, authorizing said UE (20) to proceed to an authentication per EAP-AKA' with said AAA-S (24) and, if said criterion does not match, abort said authentication.

2. A method according to claim 1 wherein said criterion is one of:
- the localization of said UE (20), including a roaming situation;
- an exact S-NSSAI value
- a matching Slice Service Type (SST) or matching Service Differentiator (SD)
- a roaming not allowed information
- an allowed or not allowed geographical location of the UE
- a list of authorized S-NSSAI, including mapped S-NSSAI, or forbidden S-NSSAI
- a reference to preconfigured rules in the UE

3. AAA-S (24) for network slice-specific authentication and authorization in a telecommunication network, said AAA-S (24) being configured for sending from said AAA-S (24) to a UE (20) in an AT_KDF_INPUT attribute of an EAP message at least one criterion instead of Network Name, that said UE (20) has to verify.

4. UE (20) for network slice-specific authentication and authorization in a telecommunication network, said UE (20) being configured for:
- receiving from a AAA-S (24) in an AT_KDF_INPUT attribute of an EAP message at least one criterion instead of Network Name, that said UE (20) has to verify;
- verifying that said criterion matches with a corresponding criterion stored at said UE (20), and
- if said criterion matches, authorizing said UE (20) to proceed to an authentication per EAP-AKA' with said AAA-S (24) and, if said criterion does not match, abort said authentication.
